# EUROPEAN PATENT APPLICATION

(11) **EP 4 760 862 A1**
(43) Date of publication of application: **17.06.2026**
(21) Application number: 24907855.1
(22) Date of filing: 28.11.2024
(51) Int. Cl.: H01M 10/44, H01M 10/0585, H01M 4/04

(54) **METHOD FOR ACTIVATING ALL-SOLID-STATE BATTERY**

(30) Priority: 20.12.2023 KR 20230187488
(71) Applicant: LG Energy Solution, Ltd., Seoul 07335 (KR)
(72) Inventor: KIM, Jeonggil, Daejeon 34122 (KR); WOO, Seunghe, Daejeon 34122 (KR); CHOI, Lak Young, Daejeon 34122 (KR); LEE, Jaegil, Daejeon 34122 (KR); LEE, Gyeongseop, Daejeon 34122 (KR); AHN, Sanghyeok, Daejeon 34122 (KR)
(74) Representative: Goddar, Heinz J.
(86) International application number: PCT/KR2024/019129
(87) International publication number: WO 2025/135570

(57) **Abstract**

The present invention relates to a method of activating an all-solid-state battery comprising a positive electrode, a negative electrode, and a solid electrolyte layer interposed between the positive electrode and negative electrode, the method comprising: a first charging step of charging the all-solid-state battery at a first current density; and a first discharging step of discharging the all-solid-state battery at a second current density greater than the first current density after the first charging step.

## Description

### [Technical Field]

This application claims the benefit of priority to Korean Patent Application No. 10-2023-0187488, filed December 20, 2023, the disclosures of which are incorporated herein by reference as part of this specification.

The present invention relates to a method of activating an all-solid-state battery.

### [Related Art]

While lithium secondary batteries have been primarily used in small-scale applications such as mobile devices and laptop computers, the research direction has recently expanded to medium and large-scale applications such as energy storage systems (ESS) and electric vehicles (EV).

For these medium- to large-sized lithium secondary batteries, unlike small-sized ones, the operating environment is harsher (e.g., temperature, shock) and more batteries need to be used, so safety needs to be ensured along with good performance and affordable price.

Most commercially available lithium secondary batteries currently utilize organic liquid electrolytes, which are lithium salts dissolved in a flammable organic solvent, and therefore pose a potential risk of leakage, ignition, and explosion. Therefore, the use of solid electrolytes to replace the organic liquid electrolytes has been attracting attention as an alternative to overcome the above safety issues.

Lithium secondary batteries using solid electrolytes offer advantages such as enhanced safety, improved reliability by preventing electrolyte leakage, and facilitating the manufacture of thin batteries. In addition, lithium metal can be used as a negative electrode to improve energy density, which is expected to be applied to small-sized secondary batteries and high-capacity secondary batteries for electric vehicles, making it the next-generation battery.

However, lithium secondary batteries using solid electrolytes have lower ionic conductivity than liquid electrolytes and suffer from poorer output characteristics, especially at low temperatures. In addition, there are problems such as poor surface adhesion of the solid electrolyte to the active material compared to the liquid electrolyte, causing an increase in interfacial resistance due to the volume expansion of the active material during the charge and discharge process, and the distribution of the solid electrolyte without direct contact with the electrode active material, leading to decreased output characteristics or capacity characteristics relative to the amount of conductive material input.

**In** addition, in the case of lithium secondary batteries using solid electrolyte, lithium dendrites are inevitably generated during the charging and discharging process of the battery, and lithium dendrites formed in the branch form can grow through the solid electrolyte and cause reversible loss of lithium and short circuit of the battery, which is evaluated as a factor that adversely affects the lifespan of lithium secondary batteries.

As a solution to this problem, a "pressurization process" is used to apply an external force during the operation of lithium secondary batteries using solid electrolyte, but even this external factor cannot completely solve the problem caused by uneven growth of lithium dendrites.

### [Prior Art Reference]

### [Patent Reference]

(Patent Reference 1) Korean Laid-open Patent Publication No. 10-2016-0091375 (August 2, 2016)

### [Detailed Description of the Invention]

### [Technical Problem]

The object of the present invention is to provide a method for activating an all-solid-state battery by suppressing the formation of lithium dendrites in the all-solid-state battery by discharging the battery at a high rate with a current density greater than the current density at initial charging, thereby improving the lifetime characteristics of the battery.

### [Technical Solution]

One example of the present invention provides a method of activating an all-solid-state battery comprising a positive electrode, a negative electrode, and a solid electrolyte layer interposed between the positive electrode and negative electrode, the method comprising: a first charging step of charging the all-solid-state battery at a first current density; and a first discharging step of discharging the all-solid-state battery at a second current density greater than the first current density after the first charging step.

The first current density may be 0.05 to 0.33 C.

The second current density may be 1.0 to 2.5 C.

The first charging step and the first discharging step are defined as one cycle, and this cycle may be performed 3 to 10 times.

The negative electrode may comprise a current collector, wherein a lithium precipitation layer is formed between the negative electrode and the solid electrolyte layer after the first charging step.

The thickness of the lithium precipitation layer may be 20 to 40 µm.

The positive electrode may comprise one or more of a sulfide-based solid electrolyte, an oxide-based solid electrolyte, and a polymer-based solid electrolyte.

### [Advantageous Effects]

According to the present invention, by discharging an all-solid-state battery at a high rate with a current density greater than the current density that initially charges the battery, the formation of lithium dendrite can be suppressed or the interfacial contact defects in the battery caused by unevenly precipitated lithium dendrites can be resolved, thereby improving the capacity and lifetime characteristics of the all-solid-state battery.

### [Brief Description of Drawing]

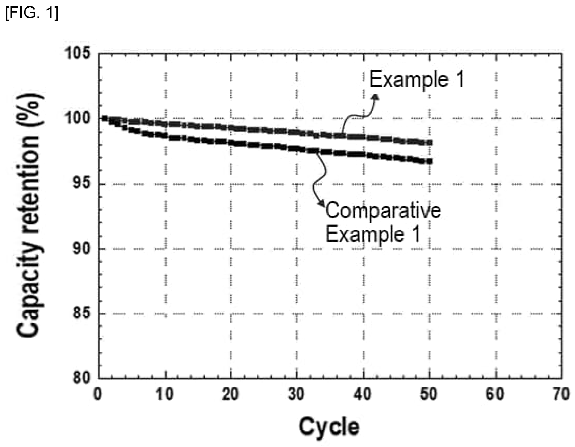

FIG. 1 is a graph depicting the lifetime characteristics of an all-solid-state battery prepared according to a method of activating an all-solid-state battery according to one example and comparative example of the present invention.

### [Best Mode]

Examples of the present invention are described in detail below. The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention. Accordingly, it is to be understood that the configurations described in the examples described herein are only the most preferred examples of the invention and do not represent all of the technical ideas of the invention, and that there may be various equivalents and variations that may be substituted for them at the time of the application.

Throughout the specification, whenever any part "includes" any component, it means that it can include more of the other component, not that it excludes the other component, unless specifically stated to the contrary.

In addition, the description limiting or further specifying components may apply to any invention and is not limited to any particular invention, unless otherwise specified.

Also, throughout the description and claims of the present invention, singular terms include the plural ones unless otherwise indicated.

In addition, throughout the description and claims of the present invention, "or" includes "and" unless otherwise noted. Therefore, "including A or B" means all three of the above cases: including A, including B, or including both A and B.

Also, all numerical ranges include values at both ends and all intermediate values in between, unless explicitly stated to exclude them.

### Method for activating all-solid-state battery

Hereinafter, the method for activating an all-solid-state battery of the present invention will be described in detail.

A method of activating an all-solid-state battery according to the present invention activates an all-solid-state battery comprising a positive electrode, a negative electrode, and a solid electrolyte layer interposed between the positive electrode and negative electrode, the method comprising: a first charging step of charging the all-solid-state battery at a first current density; and a first discharging step of discharging the all-solid-state battery at a second current density greater than the first current density after the first charging step.

In recent years, to solve the problems of leakage, ignition, and explosion of electrolyte caused by the predominant use of liquid electrolyte in conventional lithium-ion batteries, all-solid-state batteries using solid electrolyte are being actively researched, and among them, so-called "lithium precipitated negative electrode," in which lithium is precipitated between the negative electrode current collector and the solid electrolyte layer during the driving process of all-solid-state batteries, forming a lithium precipitation layer, is being actively researched.

The lithium precipitated negative electrode may comprise a lithium precipitation layer comprising a composite of metal nanoparticles immersed in a carbon-based material that is generally lithophilic with lithium metal and thus capable of forming an alloy with lithium metal.

In the case of an all-solid-state battery comprising such a lithium precipitated negative electrode, as the charging and discharging process of the battery proceeds, lithium precipitation or dissolution occurs in the lithium precipitation layer formed between the solid electrolyte layer and the negative electrode current collector, and the precipitation of the lithium may occur unevenly by reaction area depending on the electrode structure of the all-solid-state battery or the external pressurization conditions.

As such, the lithium precipitated in a biased manner within the lithium precipitation layer forms a branch-like lithium dendrite, which grows through the solid electrolyte layer of the all-solid-state battery, potentially causing reversible loss of lithium in the all-solid-state battery and shorting of the battery.

To solve this problem of all-solid-state batteries, all-solid-state batteries are usually driven in an externally pressurized environment, but the unbalanced growth of lithium dendrites is not fully resolved even under the above driving pressure conditions.

The present invention aims to solve the problem originating from disproportionately grown lithium dendrites, particularly in all-solid-state batteries comprising a "lithium precipitation layer" between a solid electrolyte layer and a negative electrode current collector, and solves the problem through a first charging step of charging an all-solid-state battery comprising a positive electrode, a negative electrode, and a solid electrolyte layer interposed between the positive electrode and negative electrode at a first current density and a first discharging step of discharging the battery at a second current density, wherein the second current density of the discharging step is greater than the first current density of the first charging step, which is a high-rate discharging process.

An all-solid-state battery according to the present invention includes a positive electrode, a negative electrode, and a solid electrolyte layer interposed between the positive electrode and negative electrode.

In one example of the present invention, the positive electrode may comprise a positive electrode current collector and a positive electrode active material layer.

The positive electrode current collector is a conductive member that functions as a passage for electrons to flow from the positive electrode toward an external load or from the power source toward the positive electrode, depending on the battery response.

The positive electrode current collector may typically have a thickness of 3 to 500 µm. The positive electrode current collector is not particularly limited as long as it has a high conductivity without causing chemical changes in the battery, for example, stainless steel, aluminum, nickel, titanium, calcined carbon, or aluminum or stainless steel whose surface is treated with carbon, nickel, titanium, or silver can be used. The current collector can also form microscopic irregularities on its surface to increase the adhesion of the positive electrode active material, and can be in various forms, such as films, sheets, foils, nets, porous materials, foams, non-woven materials, etc.

Furthermore, the positive electrode current collector may be a monolayer structure of a single material, or a laminated structure comprising layers of any suitable combination of such materials. From the perspective of reducing the weight of the current collector, it may include a conductive resin layer composed of at least a resin with conductivity.

The positive electrode active material layer may include a positive electrode active material, a solid electrolyte, a conductive material, and a binder.

It is not particularly limited, as long as it is a lithium complex oxide-based material capable of reversible insertion and removal of lithium ions. For example, it may comprise one or more of complex oxides of cobalt, manganese, nickel, iron, or a combination thereof; and lithium.

As a more specific example, a compound represented by any of the following chemical formulae can be used as the positive electrode active material: LiₐA_{1-b}R_{b}D₂ (wherein 0.90 ≤ a ≤ 1.8 and 0 ≤ b ≤ 0.5); LiₐE_{1-b}R_{b}O_{2-c}D_{c} (wherein 0.90 ≤ a ≤ 1.8, 0 ≤ b ≤ 0.5, and 0 ≤ c ≤ 0.05); LiE_{2-b}R_{b}O_{4-c}D_{c} (wherein 0 ≤ b ≤ 0.5, 0 ≤ c ≤ 0.05); LiₐNi_{1-b-c}Co_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂ (wherein 0.90 ≤ a ≤ 1.8, 0 ≤ b ≤ 0.9, 0 ≤ c ≤ 0.5, 0 ≤ d ≤0.5 and 0 ≤ e ≤ 0.1); LiₐNiG_{b}O₂ (wherein 0.90 ≤ a ≤ 1.8 and 0.001 ≤ b ≤ 0.1); LiₐCoG_{b}O₂ (wherein 0.90 ≤ a ≤ 1.8 and 0.001 ≤ b ≤ 0.1); LiₐMnG_{b}O₂ (wherein 0.90 ≤ a ≤ 1.8 and 0.001 ≤ b ≤ 0.1); LiₐMn₂G_{b}O₄ (wherein 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f})J₂(PO₄)₃ (wherein 0 ≤ f ≤ 2); Li_{(3-f)}Fe₂(PO₄)₃ (wherein 0 ≤ f ≤ 2); and LiFePO₄.

In the above formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or any combination thereof; G is Al, Cr, Mn, Fe, Mg, La, Ce, Sr, V, or any combination thereof; Q is Ti, Mo, Mn, or any combination thereof; T is Cr, V, Fe, Sc, Y, or any combination thereof; and J is V, Cr, Mn, Co, Ni, Cu, or any combination thereof.

In one example of the present invention, the positive electrode active material may be comprised in an amount of 50 to 95 parts by weight, based on 100 parts by weight of the total of the positive electrode active material layer. For example, the content of the positive electrode active material may be 50 parts or more, 60 parts or more, 70 parts or more, 75 parts or more, 78 parts or more, or 80 parts or more, 95 parts or less, 90 parts or less, 85 parts or less, based on 100 parts by weight of the total positive electrode active material layer.

If the content of the positive electrode active material is less than 50 parts by weight based on 100 parts by weight of the total positive electrode active material layer, there may be a problem that the capacity and overall energy density of the electrode are reduced, and if it exceeds 95 parts by weight, there may be a problem that the interfacial resistance between the positive electrode active material and the solid electrolyte is increased due to the increase of voids in the positive electrode active material layer, so it is necessary to appropriately control the content of the positive electrode active material within the above range for the positive electrode active material layer for an all-solid-state battery according to the present invention.

The conductive material is not particularly limited as long as it has conductivity without causing chemical changes in the battery, for example, graphite, such as natural graphite or artificial graphite; carbon black, such as carbon black, acetylene black, ketjen black, channel black, furnace black, lamp black, or summer black; conductive fibers, such as carbon fibers or metal fibers; metal powders, such as carbon fluoride, aluminum, or nickel powder; conductive whiskers, such as zinc oxide, or potassium titanate; conductive metal oxides, such as titanium oxide; and conductive materials, such as polyphenylene derivatives. The conductive material may be comprised in an amount of about 0.01 to 10 parts by weight, or 0.01 to 5 parts by weight, or 0.01 to 3 parts by weight, based on 100 parts by weight of the total positive electrode active material layer.

The binder is a component added in consideration of the adhesion of the positive electrode active material, the solid electrolyte and the conductive material contained in the positive electrode active material layer, and may be of any kind available for electrode formation in the technical field in the art, for example, at least one selected from the group consisting of nitrile-butadiene rubber (NBR), polystyrene, and styrene butadiene rubber (SBR), and preferably, a binder of the butadiene rubber family, such as nitrile-butadiene rubber (NBR) or styrene butadiene rubber (SBR). The binder may be comprised in an amount of about 0.1 to 10 parts by weight, based on 100 parts by weight of the total positive electrode active material layer.

If the content of the binder is less than 0.1 parts by weight based on 100 parts by weight of the total positive electrode active material layer, the adhesion of the electrode may decrease, which may cause problems with processability and stability of the coating product, and if it exceeds 10 parts by weight, the resistance of the electrode may increase, which may reduce the cell lifetime and output characteristics, so it should be appropriately adjusted within the above range.

In one example of the present invention, the solid electrolyte may comprise one or more of a sulfide-based solid electrolyte, an oxide-based solid electrolyte and a polymer-based solid electrolyte, and more specifically, the solid electrolyte may comprise a sulfide-based solid electrolyte.

The sulfide-based solid electrolyte included in the positive electrode active material layer may be, for example, represented by Formula 1 below.

[Formula 1] LiₐM_{b}S_{c}X_{d}

wherein M is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W, or La, wherein X is F, Cl, Br, I, Se, Te, or O, and wherein 0<a≤6, 0<b≤6, 0<c≤6, and 0<d≤6.

For example, in Formula 1, M can be B, Si, Ge, P, or N.

For example, in Formula 1, X can be F, Cl, Br, I, or O.

For example, the sulfide-based solid electrolyte represented by Formula 1 above may be Li₂S-P₂S₅-LiBr, Li₂S-P₂S₅-LiCl-LiBr, Li₂S-SiS₂-LiBr, Li₂S-P₂S₅, Li₂S-P₂S₅-LiCl, Li₂S-P₂S₅-Li₂O, Li₂S-P₂S₅-Li₂O-LiI, Li₂S-SiS₂, Li₂S-SiS₂-LiI, Li₂S-SiS₂-LiCl, Li₂S-SiS₂-B₂S₃-LiI, Li₂S-SiS₂-P₂S₅-LiI, Li₂S-B₂S₃, Li₂S-GeS₂, Li₂S-SiS₂-Li₃PO₄, or any combination thereof.

The sulfide-based solid electrolyte may have an argyrodite-type crystal structure. As the sulfide-based solid electrolyte has an argyrodite-type crystal structure, the sulfide-based solid electrolyte has high purity and crystallinity, and can form a stable interfacial phase, which has a high energy density and greatly improves the potential stability and ionic conductivity.

Such oxide-based solid electrolytes include, for example, compounds with NASICON structure. Examples of compounds with NASICON structure include compounds represented by the general formula Li₁₊ₓAlₓGe₂₋ₓ(PO₄)₃ (wherein 0 ≤ x ≤ 2) (LAGP), and compounds represented by the general formula Li₁₊ₓAlₓTi₂₋ₓ(PO₄)₃ (wherein 0 ≤ x ≤ 2) (LATP). Other examples of oxide solid electrolytes include LiLaTiO (for example, Li_{0.34}La_{0.51}TiO₃), LiPON (for example, Li_{2.9}PO_{3.3}N_{0.46}), and LiLaZrO (for example, Li₇La₃Zr₂O₁₂).

The solid electrolyte may be comprised in an amount of 5 to 49 parts by weight, based on 100 parts by weight of the total positive electrode active material layer.

The content of the solid electrolyte may be, for example, 5 parts by weight or more, 6 parts by weight or more, 7 parts by weight or more, 8 parts by weight or more, 9 parts by weight or more, 10 parts by weight or more, 11 parts by weight or more, 12 parts by weight or more, 13 parts by weight or more, 14 parts by weight or more, 15 parts by weight or more, 16 parts by weight or more, 17 parts by weight or more, 18 parts by weight or more, 19 parts by weight or more, 19.4 parts by weight or more, 49 parts by weight or less, 45 parts by weight or less, 40 parts by weight or less, 35 parts by weight or less, 30 parts by weight or less, 25 parts by weight or less, 24 parts by weight or less, 23 parts by weight or less, 22 parts by weight or less, 21 parts by weight or less, or 20 parts by weight or less, based on 100 parts by weight of the total positive electrode active material layer. Preferably, the content of the solid electrolyte may be comprised in an amount of 12 to 20 parts by weight based on 100 parts by weight of the total positive electrode active material layer.

**If** the content of the solid electrolyte is less than 5 parts by weight based on 100 parts by weight of the total positive electrode active material layer, there may be a problem that the capacity and the overall energy density of the electrode are reduced due to the increase of voids in the positive electrode active material layer, which increases the interfacial resistance between the positive electrode active material and the solid electrolyte, and if it exceeds 49 parts by weight, there may be a problem that the capacity and the overall energy density of the electrode are reduced, so it is necessary to appropriately adjust the content of the solid electrolyte within the above range.

The shape of the solid electrolyte may be, for example, a particle shape such as a spherical shape or an elliptical shape, a thin film shape, or the like, but when the shape of the solid electrolyte is a particle shape, the average particle size may be 0.1 to 5 µm. For example, the solid electrolyte may have an average particle size of 0.1 to 3 µm, 0.1 to 2 µm, 0.1 to 1 µm, 0.1 to 0.9 µm, 0.1 to 0.8 µm, 0.1 to 0.7 µm, 0.1 to 0.6 µm, or 0.1 to 0.5 µm. The average particle size of the solid electrolyte may be, for example, a volume equivalent median diameter (D50) measured using a laser particle size distribution meter.

**If** the average particle size of the solid electrolyte is less than 0.1 µm, there may be a problem that the solid electrolyte particles may easily agglomerate or may not be uniformly dispersed and may be biased in the electrode, and it may be difficult to form an effective interface between the positive electrode active material and the solid electrolyte, and if it exceeds 5 µm, there may be a problem that voids may occur in the positive electrode active material layer and the ionic conductivity of the electrode may decrease, so it is desirable to appropriately adjust the solid electrolyte to have an average particle size in the above range.

The positive electrode active material layer can be prepared according to methods well known in the art, and is not limited to a particular method of preparation, but can be prepared, for example, by a dry electrode process method in which a dough is prepared by mixing the positive electrode active material, a solid electrolyte, a conductive material and a binder, and then sheeting the dough, or by a wet process in which a slurry of positive electrode compound is prepared by mixing in a solvent and applying this positive electrode compound to the positive electrode current collector.

The positive electrode active material layer may further comprise, in addition to the positive electrode active material, solid electrolyte, conductive material and binder described above, additives such as, for example, fillers, coatings, dispersants, ionic conductivity aids and the like. The fillers, coatings, dispersants, ionic conductivity aids, and the like can be any of the known materials typically used for electrodes in all-solid-state batteries.

The thickness of the positive electrode active material layer can be varied depending on the intended configuration of the all-solid-state battery, but is preferably in the range of 0.1 µm to 1,000 µm, for example, and more preferably in the range of 40 µm to 100 µm.

The solid electrolyte layer is a layer interposed between the positive electrode and negative electrode comprising solid electrolyte as a main component. The solid electrolyte layer comprises a solid electrolyte, and the solid electrolyte may be the same as or different from the solid electrolyte contained in the positive electrode active material layer, and the specific types thereof are the same as described in the positive electrode active material layer, so that a specific description thereof will be omitted.

The elastic modulus, or Young's modulus, of the solid electrolyte layer may be, for example, 35 GPa or less, 30 GPa or less, 27 GPa or less, 25 GPa or less, 23 GPa or less. The elastic modulus, or Young's modulus, of the solid electrolyte layer may be, for example, 10 to 35 GPa, 15 to 35 GPa, 15 to 30 GPa, or 15 to 25 GPa. As the solid electrolyte layer has an elastic modulus in this range, pressurization and/or sintering of the solid electrolyte contained in the solid electrolyte layer can be more easily accomplished.

The solid electrolyte layer further comprises, for example, a binder. The binder included in the solid electrolyte layer may be, for example, but not limited to, styrene butadiene rubber (SBR), polytetrafluoroethylene, polyvinylidene fluoride, polyvinylidene fluoride, polyethylene, or any other binder used in the art. The binder of the solid electrolyte layer may be the same as or different from the binder of the positive electrode active material layer.

The thickness of the solid electrolyte layer may be variable depending on the configuration of the intended all-solid-state battery, and from the point of view of improving the volume energy density of the battery, may preferably be 600 µm or less, more preferably 500 µm or less, or 400 µm or less. On the other hand, there is no particular limitation on the lower limit value of the thickness of the solid electrolyte layer, but it may preferably be 1 µm or more, 5 µm or more, or 10 µm or more.

In one example of the present invention, the negative electrode may comprise a negative electrode current collector, and may comprise a lithium precipitation layer formed by precipitation of lithium between the solid electrolyte layer and the negative electrode current collector upon charging and discharging of the all-solid-state battery.

The negative electrode current collector is a conductive member that functions as a passage for electrons to emit from the negative electrode towards the power source or flow from an external load towards the negative electrode, depending on the charge and discharge behavior of the battery, wherein the negative electrode current collector consists of, for example, a material that does not react with lithium, i.e., does not form both alloys and compounds. The material consisting of the negative electrode current collector may be, for example, but not necessarily limited to, copper (Cu), stainless steel, titanium (Ti), iron (Fe), cobalt (Co), and nickel (Ni), as long as it is used as an electrode current collector in the art. The negative electrode current collector may consist of one of the metals described above, or may consist of an alloy or coating material of two or more metals. The negative electrode current collector is, for example, in the form of a plate or foil.

The negative electrode may further comprise additives used in conventional all-solid-state batteries, such as fillers, dispersants, ionic conductors, and the like.

In one example of the present invention, a lithium precipitation layer may further be included between the negative electrode current collector and the solid electrolyte layer.

The lithium precipitation layer is formed by the precipitation of lithium metal on the negative electrode current collector during the charging process of the all-solid-state battery, and the lithium precipitation layer consisting of such precipitated lithium metal can function as the negative electrode active material layer of the all-solid-state battery according to the present invention. Thus, in the charging process of an all-solid-state battery, the thickness of the lithium precipitation layer increases as lithium ions precipitate on the negative electrode current collector, and conversely, in the discharging process, the thickness of the lithium precipitation layer decreases as the lithium metal in the lithium precipitation layer dissolves (or ionizes).

For example, the thickness of the lithium precipitation layer at full charge of the all-solid-state battery may be 20 to 40 µm.

The all-solid-state battery may be prepared by manufacturing such a positive electrode, a solid electrolyte layer and a negative electrode, respectively, and then stacking them in sequence.

In one example of the present invention, the electrode assembly stacked in the above sequence may be a structure housed in a case, such as a pouch. It is also possible to fabricate an all-solid-state battery by stacking two or more electrode assemblies.

The all-solid-state battery may further comprise an elastic sheet on an outer side of at least one of the positive electrode current collector and the negative electrode current collector. The elastic sheet may be represented as a buffer layer or an elastic layer, which allows pressure to be uniformly delivered to the electrode laminate to ensure good contact of the solid components, and may also play a role in relieving stresses transmitted to the solid electrolyte, and may play a role in inhibiting cracking of the solid electrolyte due to accumulation of stresses due to changes in the thickness of the electrode during charge and discharge.

In one example of the present invention, an all-solid-state battery having the above-described positive electrode, negative electrode and solid electrolyte layer interposed between the positive electrode and negative electrode is subjected to a first charging step of charging at a first current density, and the space between the solid electrolyte layer and the negative electrode current collector is precipitated with lithium, thereby forming the lithium precipitation layer.

However, the solid electrolyte layer and the negative electrode current collector are both made of solid materials and therefore have a plurality of irregularities on their surfaces, and as the charging stage of the all-solid-state battery progresses, there is a strong tendency for lithium metal to precipitate from the parts where the irregularities of the solid electrolyte layer and the negative electrode current collector are in contact with each other.

Furthermore, the lithium metal grown with this tendency forms lithium dendrites, and the lithium dendrites grow through the solid electrolyte layer, thereby causing reversible loss of lithium in the all-solid-state battery and shorting of the battery.

In one example of the present invention, an all-solid-state battery that has undergone a first charging step of charging at the first current density is subjected to a first discharging step of discharging at a second current density higher than the first current density, so that the lithium metal reacts with the lithium metal having a relatively greater length, which is precipitated from the tip of the lithium metal in the lithium precipitation layer, specifically the point where the irregularities of the solid electrolyte layer and the negative electrode current collector are in contact with each other, and induces dissolution, thereby suppressing the growth of lithium dendrites.

In other words, in proceeding with the first discharging step, if a low-rate discharge process using a current density similar to that of the first charging step is carried out, the lithium metal formed in the lithium precipitation layer is dissolved into lithium ions (Li⁺) uniformly in the entire area of the lithium precipitation layer, so that the morphology of the lithium metal formed in the first charging step is maintained, and it is difficult to suppress the growth of lithium dendrites formed by repeated charging and discharging processes of an all-solid-state battery. Whereas, the method for activating an all-solid-state battery according to the present invention performs a high-rate discharge process using a second current density greater than the first current density in the first discharging step, which has the effect of suppressing the growth of such lithium dendrites.

In one example of the present invention, the first current density of the first charging step may have a range of 0.05 to 0.33 C, for example 0.08 to 0.3 C, preferably 0.1 to 0.25 C.

If the first current density of the first charging step is less than 0.05 C, there is a risk of decreased productivity due to the longer time required to activate the all-solid-state battery, and if it exceeds 0.33 C, there is a problem of growth of uneven precipitation of lithium metal between the solid electrolyte layer and the negative electrode current collector.

In one example of the present invention, the second current density of the first discharging step may have a range of 1 to 2.5 C, for example 1.25 to 2.25 C, preferably 1.5 to 2 C.

If the second current density of the first discharging step is less than 1 C, as the lithium metal formed in the lithium precipitation layer in the discharging step of the all-solid-state battery does not dissolve from the tip point, the effect of suppressing the formation of lithium dendrites as the charging and discharging continues may be insignificant, and if it exceeds 2.5 C, there may be a problem that the all-solid-state battery is not sufficiently discharged as the internal resistance due to the large current increases.

In one example of the present invention, when the first charging step and first discharging step are defined as "one cycle" of the charging and discharging process, the charging and discharging process can be performed 3 to 10 times.

If the above charging and discharging process is performed less than 3 times, the flattening of the lithium metal formed in the lithium precipitation layer during the discharging step of the all-solid-state battery may be insignificant, and if the above charging and discharging process is performed more than 10 times, the flattening of the lithium metal may be sufficiently advanced, resulting in no further flattening effect.

As described above, the all-solid-state battery according to the present invention is useful in portable devices such as cell phones, laptop computers, digital cameras, and in electric vehicles such as hybrid electric vehicles (HEVs), because it stably exhibits excellent discharge capacity, output characteristics, and capacity retention.

Accordingly, according to another example of the present invention, there is provided a cell module comprising the all-solid-state battery as a unit cell and a cell pack comprising same.

The battery module or battery pack may be utilized to power one or more of the following medium- to large-sized devices: a power tool; an electric vehicle, including an electric vehicle (EV), a hybrid electric vehicle, and a plug-in hybrid electric vehicle (PHEV); or a system for storing power.

### [Mode for Practicing the Invention]

Specific examples of the present invention are described below. However, the examples described below are intended only to specifically illustrate or describe the present invention and are not intended to limit the present invention. Furthermore, any matter not described herein can be sufficiently inferred by a person skilled in the art, and is hereby omitted.

### Manufacturing Example: Manufacturing of all-solid-state battery

### (1) Manufacturing of positive electrode

Based on a total of 100 parts by weight of the positive electrode layer, 78 parts by weight of LiNi_{0.8}Co_{0.1}Mn_{0.1}O₂ powder with a particle size (D50) of 5 µm as the positive electrode active material, 19.5 parts by weight of lithium argyrodite-type solid electrolyte Li₆PS₅Cl, 1.5 parts by weight of carbon black conductive material, and 1.0 parts by weight of styrene butadiene rubber (SBR) binder were added to a xylene solvent, 2 mm zirconia ball was added, and they were stirred with a sink-type mixer to prepare a slurry.

The prepared slurry was applied to one side of the aluminum current collector with a thickness of 15 µm, as the positive electrode current collector, and dried in a vacuum oven at 100°C for 8 hours to prepare the positive electrode of an all-solid-state battery.

### (2) Preparation of solid electrolyte layer

To a binder solution of an acrylic-based binder (SX-A334, Zeon) dissolved in isobutyl isobutyrate (IBIB) solvent, lithium argyrodite-type solid electrolyte Li₆PS₅Cl was added and stirred in a sink-type mixer to adjust to the appropriate viscosity. After adjusting the viscosity, 2 mm zirconia ball was added and stirred again with a sink-type mixer to make a slurry. The slurry contains 98.5% by weight solid electrolyte and 1.5% by weight binder. The slurry was applied by a bar coater on a release PET film and dried at room temperature to prepare a solid electrolyte layer.

### (3) Manufacturing of all-solid-state battery

The prepared positive electrode and solid electrolyte layers were cut together with a nickel foil negative electrode current collector, stacked in the order of positive electrode, solid electrolyte layer, and negative electrode current collector, sealed in a pouch, and subjected to high temperature at 80°C and 500 MPa for 30 minutes, and then subjected to a warm isostatic press (WIP) to produce an all-solid-state battery.

In the pressurized state, the thickness of the positive electrode was about 100 µm, the thickness of the negative electrode current collector was about 7 µm, and the thickness of the solid electrolyte layer was about 60 µm.

### Example 1: Activation of all-solid-state battery

The all-solid-state battery prepared in Manufacturing Example was subjected to a first charging step at a first current density of 0.1 C until the battery voltage was 4.2 V, and then a first discharging step at a second current density of 1.5 C until the battery voltage was 3.0 V.

The above charging and discharging process was defined as one cycle, and repeated for 5 cycles, followed by 50 cycles at 0.33 C.

The discharge capacity of each cycle was measured using the charge and discharge evaluation device "TOSCAT-3000" (trade name: Toyo System).

### Comparative Example 1: Activation of all-solid-state battery

The all-solid-state battery prepared in Manufacturing Example was subjected to a first charging step at a first current density of 0.1 C until the battery voltage was 4.2 V, and then a first discharging step at a first current density of 0.1 C until the battery voltage was 3.0 V.

The above charging and discharging process was defined as one cycle, and repeated for 5 cycles, followed by 50 cycles at 0.33 C.

The discharge capacity of each cycle was measured using the charge and discharge evaluation device "TOSCAT-3000" (trade name: Toyo System).

The capacity retention rate of the discharge capacity of the all-solid-state battery according to Example 1 and Comparative Example 1 above was measured, and the results are shown in FIG. 1.

Referring to FIG. 1, it can be seen that for the all-solid-state battery according to Example 1, the capacity retention rate is significantly improved compared to the all-solid-state battery according to Comparative Example 1 at 50 cycles as a result of performing a high-rate discharge with a second current density greater than the first current density during the first discharging step.

This can be understood as the formation of dendrites is suppressed as the lithium metal formed in the lithium precipitation layer dissolves into lithium ions from the tip point as the discharging step proceeds with a higher current density than the charging step, resulting in improved lifetime characteristics of the all-solid-state battery.

While preferred examples of the present invention have been described in detail above, the scope of the invention is not limited thereto, and various modifications and improvements by those skilled in the art utilizing the basic concepts of the invention as defined by the following claims are also within the scope of the invention.

## Claims

1. A method of activating an all-solid-state battery comprising a positive electrode;
a negative electrode; and
a solid electrolyte layer interposed between the positive electrode and negative electrode,
comprising a first charging step of charging the all-solid-state battery at a first current density; and
a first discharging step of discharging the all-solid-state battery at a second current density greater than the first current density after the first charging step.

2. The method of activating an all-solid-state battery according to claim 1,
wherein the first current density is 0.05 to 0.33 C.

3. The method of activating an all-solid-state battery according to claim 1,
wherein the second current density is 1.0 to 2.5 C.

4. The method of activating an all-solid-state battery according to claim 1,
wherein the first charging step and the first discharging step are defined as one cycle, and this cycle is performed 3 to 10 times.

5. The method of activating an all-solid-state battery according to claim 1,
wherein the negative electrode includes a current collector,
wherein a lithium precipitation layer is formed between the negative electrode and the solid electrolyte layer after the first charging step.

6. The method of activating an all-solid-state battery according to claim 5,
wherein the thickness of the lithium precipitation layer is 20 to 40 µm.

7. The method of activating an all-solid-state battery according to claim 1,
wherein the positive electrode comprises at least one of a sulfide-based solid electrolyte, an oxide-based solid electrolyte, and a polymer-based solid electrolyte.
